# EUROPEAN PATENT APPLICATION

(11) **EP 4 692 981 A1**
(43) Date of publication of application: **11.02.2026**
(21) Application number: 24778610.6
(22) Date of filing: 24.01.2024
(51) Int. Cl.: G05G 25/00, E02F 9/16, G05G 1/38

(54) **ELECTRIC OPERATION DEVICE**

(30) Priority: 24.03.2023 JP 2023048160
(71) Applicant: KAWASAKI JUKOGYO KABUSHIKI KAISHA, 6508670 Kobe-shi (JP)
(72) Inventor: YASUNAGA, Takanori, Hyogo 650-8670 (JP); SHIMIZU, Hiroaki, Hyogo 650-8670 (JP)
(74) Representative: Dehns
(86) International application number: PCT/JP2024/002113
(87) International publication number: WO 2024/202464

(57) **Abstract**

An electrical operating device for outputting an electrical signal corresponding to an operation performed with an operating tool, the electrical operating device including: a cam shaft extending in a horizontal direction; a cam that includes a pusher and to which the operating tool is mounted, the cam being swingable about the cam shaft; a push rod that is positioned below the pusher and that is displaced downward as a result of an upper end portion of the push rod being pushed downward by the pusher; a base including a guide hole that extends in an upward-downward direction below the pusher and that guides the push rod in the upward-downward direction; and a grease cup that forms, above the guide hole and together with the upper end portion of the push rod, a storage space to store grease therein. The grease cup is integrally molded with the base.

## Description

### Technical Field

The present disclosure relates to an electrical operating device.

### Background Art

Patent Literature 1 discloses an electronic operating device including: a cam that is rotatably mounted to a support base and that is operated by an operator; and a magnetosensitive detector that detects a rotational position of the cam. Bosses located on the lower side of the cam are in contact with the head of respective plungers, and the bosses are returned to their neutral position by respective springs accommodated in a body connected to the support base.

### Citation List

### Patent Literature

PTL 1: Japanese Laid-Open Patent Application Publication No. 2018-10635

### Summary of Invention

### Technical Problem

An electrical operating device includes a sliding portion where components of the electrical operating device slide against each other, such as a contact portion described in Patent Literature 1 where a boss and a plunger are in contact with each other. Desirably, grease is applied to the sliding portion from the viewpoint of durability. However, even in a case where the grease is applied to the sliding portion, the grease may flow out of the sliding portion to other portions while the electrical operating device is used repeatedly.

In view of the above, an object of one aspect of the present disclosure is to provide an electrical operating device that makes it possible to retain grease on a sliding portion where components of the electrical operating device slide against each other.

### Solution to Problem

An electrical operating device according to one aspect of the present disclosure is an electrical operating device for outputting an electrical signal corresponding to an operation performed with an operating tool, the electrical operating device including: a cam shaft extending in a horizontal direction; a cam that includes a pusher and to which the operating tool is mounted, the cam being swingable about the cam shaft; a push rod that is positioned below the pusher and that is displaced downward as a result of an upper end portion of the push rod being pushed downward by the pusher; a base including a guide hole that extends in an upward-downward direction below the pusher and that guides the push rod in the upward-downward direction; and a grease cup that forms, above the guide hole and together with the upper end portion of the push rod, a storage space to store grease therein. The grease cup is integrally molded with the base.

### Advantageous Effects of Invention

The present disclosure provides an electrical operating device that makes it possible to retain grease on a sliding portion where components of the electrical operating device slide against each other.

### Brief Description of Drawings

FIG. 1 is a partial sectional schematic perspective view of an electrical operating device according to one embodiment.
FIG. 2 is a side sectional view of the electrical operating device of FIG. 1 in a non-operated state.
FIG. 3 is a side sectional view of the electrical operating device of FIG. 1 in a fully operated state.
FIG. 4 is a partially enlarged perspective view showing, in an enlarged manner, a contact portion where a cam and a push rod are in contact with each other and the vicinity thereof.

### Description of Embodiments

Hereinafter, embodiments are described with reference to the drawings.

### <Embodiment>

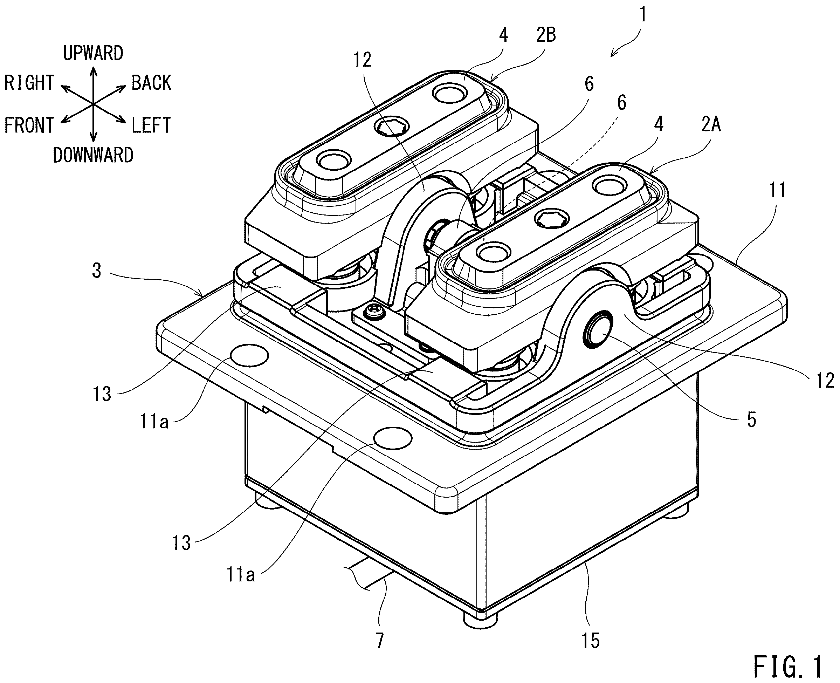

FIG. 1 is a partial sectional schematic perspective view of an electrical operating device 1 according to one embodiment. The electrical operating device 1 outputs an electrical signal corresponding to an operation performed with an operating tool. In the present embodiment, the electrical operating device 1 is, for example, a travel pedal device of a construction machine such as a hydraulic excavator. The electrical operating device 1 outputs electrical signals to drive left and right crawlers of the construction machine independently of each other in a forward travel direction and a backward travel direction. The electrical operating device 1 is fixed to the floor of an operator's cab of the construction machine.

The electrical operating device 1 includes left operating equipment 2A and right operating equipment 2B. The left operating equipment 2A is used for operating the left crawler, and the right operating equipment 2B is used for operating the right crawler. Pedals are mounted to the left and right operating equipment 2A and 2B, respectively. Each of the left operating equipment 2A and the right operating equipment 2B outputs an electrical signal corresponding to the amount of an operation performed with the pedal mounted thereto by an operator. The left operating equipment 2A and the right operating equipment 2B include a shared casing 3.

The left operating equipment 2A includes: a cam 4, to which the pedal is mounted as an operating tool; and a cam shaft 5 extending in a horizontal direction. The cam 4 is supported by the casing 3 via the cam shaft 5, such that the cam 4 is swingable about the cam shaft 5. In a case where no operation by the operator is being performed with the pedal, the cam 4 is in a predetermined neutral position within its swing range. The neutral position is alternatively referred to as a non-operation position. A potentiometer 6, which detects a swing angle of the cam 4, is located at one end of the cam shaft 5. The potentiometer 6 is located between the cam shaft 5 of the left operating equipment 2A and the cam shaft 5 of the right operating equipment 2B. The cam 4 swings integrally with the pedal. The potentiometer 6 detects a swing direction of the cam 4 from the neutral position and a swing angle of the cam 4 from the neutral position. The potentiometer 6 outputs an electrical signal corresponding to the swing direction and the swing angle to the outside via wiring 7 extending from the lower part of the casing 3.

For example, when the operator depresses the pedal in the forward direction to swing the cam 4 in a first direction, the left operating equipment 2A outputs a signal to drive the left crawler in the forward travel direction. For example, when the operator depresses the pedal in the backward direction to swing the cam 4 in a second direction opposite to the first direction, the left operating equipment 2A outputs a signal to drive the left crawler in the backward travel direction.

The left operating equipment 2A and the right operating equipment 2B are equivalent to each other. Similar to the left operating equipment 2A, the right operating equipment 2B includes the cam 4 and the cam shaft 5, which are supported by the casing 3. The left operating equipment 2A and the right operating equipment 2B are located side by side in the left-right direction, such that the cam shaft 5 of the left operating equipment 2A and the cam shaft 5 of the right operating equipment 2B are positioned coaxially with each other. The left operating equipment 2A and the right operating equipment 2B are substantially symmetrical in structure with respect to a plane perpendicular to the cam shafts 5, the plane passing midway between the left operating equipment 2A and the right operating equipment 2B. Therefore, in the description below, the left operating equipment 2A is described, and the description of the right operating equipment 2B is omitted.

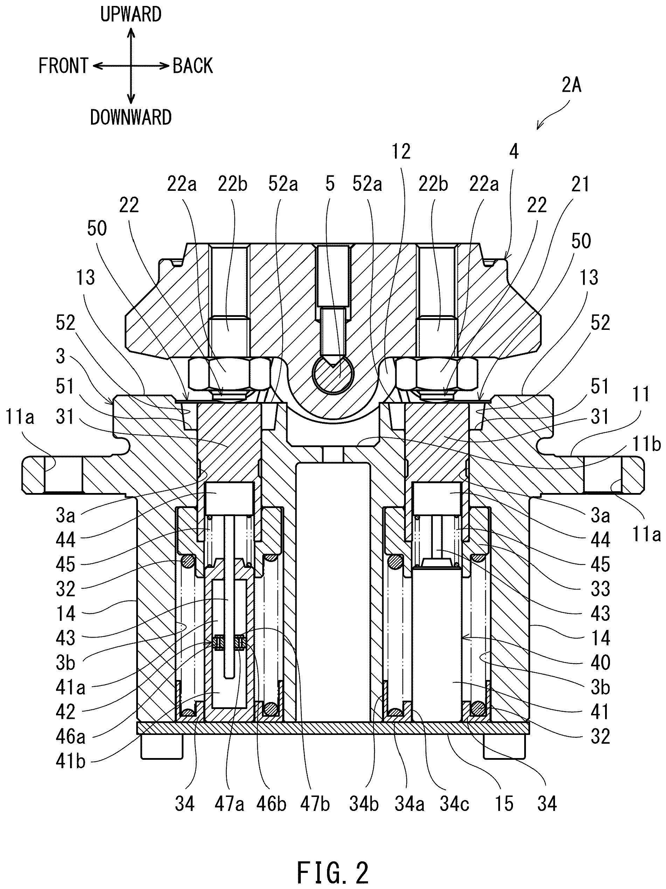

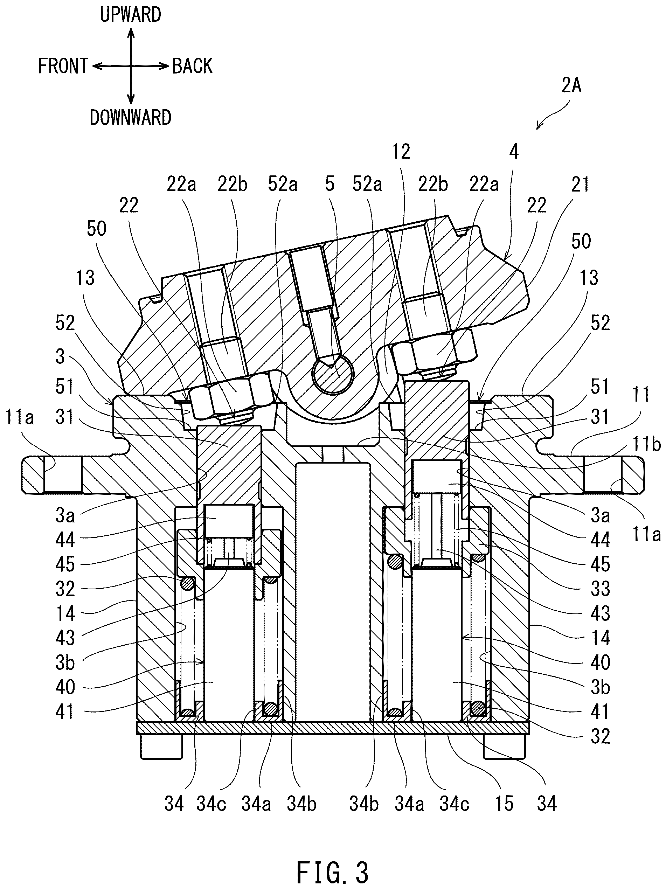

Each of FIG. 2 and FIG. 3 is a side sectional view of the left operating equipment 2A taken along a plane perpendicular to the cam shaft 5. FIG. 2 shows the left operating equipment 2A in a state where it is not operated by the operator. FIG. 3 shows the left operating equipment 2A in a state where its pedal is fully operated by the operator. In the present embodiment, as described below, the swing range of the cam 4 is restricted to fall within a predetermined swing range, and the state where the pedal is fully operated by the operator is a state where the swing angle of the cam 4 from the neutral position is maximized. In the present specification, for the sake of convenience, a horizontal direction in which the cam shaft 5 extends is referred to as a left-right direction, and a horizontal direction perpendicular to the direction in which the cam shaft 5 extends is referred to as a front-back direction. The left operating equipment 2A has a structure that is substantially symmetrical with respect to a plane perpendicular to the front-back direction, the plane passing through the cam shaft 5.

The casing 3 includes a base 11 and a pair of cam supports 12. The base 11 is positioned below the cam 4. The base 11 is substantially plate-shaped, and faces the cam 4 in the upward-downward direction. In the present embodiment, the base 11 is a portion that is mounted to the construction machine. The base 11 includes bolt holes 11a. The bolt holes 11a receive therein, for example, bolts to mount the electrical operating device 1 to the floor of the operator's cab of the construction machine. The pair of cam supports 12 are located such that they are spaced apart from each other in the left-right direction, and protrude upward from the base 11. In a space between the pair of cam supports 12 in the left-right direction, the cam 4 is located. Both end portions of the cam shaft 5 protrude from both side surfaces of the cam 4 in the left-right direction, respectively. Above the base 11, the pair of cam supports 12 support both end portions of the cam shaft 5, respectively. The pair of cam supports 12 are integrally molded with the base 11.

The cam 4 is substantially rectangular and elongated in the front-back direction. The cam shaft 5 is fixed to the central portion of the cam 4 in the front-back direction. When the cam 4 is in the neutral position, the shape of the cam 4 is symmetrical with respect to the plane perpendicular to the front-back direction, the plane passing through the cam shaft 5. Stoppers 13 are located directly below both end portions of the cam 4 in the front-back direction, respectively. The stoppers 13 protrude upward from the base 11. The stoppers 13 are integrally molded with the base 11. As shown in FIG. 3, as a result of swinging the cam 4 by a predetermined angle, one of the stoppers 13 comes into contact with an end portion of the cam 4 in the front-back direction to restrict the swing range of the cam 4.

### (Return Mechanism)

The left operating equipment 2A includes a return mechanism to return the cam 4 to the neutral position. The return mechanism of the left operating equipment 2A includes two push rods 31 and two coil springs 32. When the operator has performed an operation and thereby one end portion of the cam 4 is displaced downward, the corresponding coil spring 32 imparts upward urging force to the cam 4 via the corresponding push rod 31 to return the cam 4 to the neutral position.

The base 11 of the casing 3 includes two guide holes 3a. Below the cam 4, the two guide holes 3a extend in the upward-downward direction. The guide holes 3a guide the respective push rods 31 in the upward-downward direction. Each of the guide holes 3a is a substantially columnar space whose center axis extends in the upward-downward direction. The two guide holes 3a are located such that they are spaced apart from each other in the front-back direction. One of the guide holes 3a is positioned forward of the cam shaft 5, and the other guide hole 3a is positioned backward of the cam shaft 5.

The push rods 31 are located such that they are slidable along the respective guide holes 3a. Each of the push rods 31 is displaced downward as a result of being pushed downward by the cam 4. The upper end portions of the two push rods 31 are in contact with two pushers 22 of the cam 4, respectively. In the present embodiment, the pushers 22 are positioned between the central portion and the end portions of the cam 4 in the front-back direction.

In the present embodiment, nuts 22a are fixed to the lower surface of a body 21 of the cam 4, and set screws 22b screwed with the respective nuts 22a serve as the pushers 22. The configuration of the pushers 22 is not particularly limited. For example, the pushers 22 may be components that are fixed to the body 21 of the cam 4 by flat-point set screws or the like. The pushers 22 need not be separate components from the body 21 of the cam 4, but may be, for example, part of the body 21 of the cam 4.

The casing 3 includes two accommodating chambers 3b, each of which is connected to the lower end portion of a corresponding one of the two guide holes 3a. Each of the accommodating chambers 3b is a substantially columnar space whose center axis extends in the upward-downward direction. The center axis of each of the substantially columnar guide holes 3a coincides with the center axis of the corresponding one of the substantially columnar accommodating chambers 3b. The diameter of each accommodating chamber 3b is greater than the diameter of the corresponding guide hole 3a.

The casing 3 includes: two spring cases 14 extending downward from the base 11; and a cover 15. The accommodating chambers 3b are formed by the base 11, the spring cases 14, and the cover 15. The base 11 forms the upper surfaces of the respective accommodating chambers 3b. The spring cases 14 form the cylindrical side surfaces of the respective accommodating chambers 3b. The cover 15 forms the lower surfaces of the respective accommodating chambers 3b.

The upper end portions of the respective two spring cases 14 are connected to the base 11. The two spring cases 14 are integrally molded with the base 11. Instead of the two spring cases 14 being connected to the base 11, a structure in which the two spring cases 14 are integrated together, i.e., one spring case including two columnar spaces, may be connected to the base 11.

The cover 15 is connected to the lower end portions of the respective spring cases 14. The cover 15 is a separate component from the spring cases 14. The cover 15 is a substantially square flat plate-shaped body. The cover 15 is fixed to the spring cases 14 by fasteners such as bolts.

The coil springs 32 are located in the respective accommodating chambers 3b. In each accommodating chamber 3b, an annular spring receiver 33 is located above the coil spring 32. The annular spring receivers 33 are slidable within the respective accommodating chambers 3b in the upward-downward direction. The spring receivers 33 are sandwiched between the push rods 31 and the coil springs 32 in the upward-downward direction. The lower end portions of the respective push rods 31 are in contact with the upper surfaces of the respective spring receivers 33, and the upper end portions of the respective coil springs 32 are in contact with the lower surfaces of the respective spring receivers 33.

The diameter of each spring receiver 33 is greater than the diameter of the corresponding guide hole 3a. Accordingly, the spring receiver 33 is in contact with the upper surface of the accommodating chamber 3b. Consequently, the slide range of the spring receiver 33 is restricted to be within the accommodating chamber 3b. When the cam 4 is in the neutral position, the spring receiver 33 is in contact with the upper surface of the accommodating chamber 3b. When the cam 4 swings, the cam 4 pushes down one push rod 31. Here, the push rod 31 that is pushed and the spring receiver 33 are displaceable downward against the urging force of the coil spring 32.

In each accommodating chamber 3b, an annular spring receiver 34 is located below the coil spring 32. The lower end portion of the coil spring 32 is in contact with the upper surface of the spring receiver 34. Due to the urging force of the coil spring 32, the spring receiver 34 is pressed against the lower surface of the accommodating chamber 3b, i.e., pressed against the cover 15. Consequently, the spring receivers 34 are fixedly located in the respective accommodating chambers 3b.

Below each push rod 31, a damper assembly 40 is located. The damper assembly 40 generates resistance force when the cam 4 swings toward a return position.

The damper assembly 40 is located on a center line of the coil spring 32, the center line extending in the urging direction of the coil spring 32. At least part of the damper assembly 40 is located in the accommodating chamber 3b.

The damper assembly 40 has such an external dimension that the damper assembly 40 can be passed into the radially inner side of the coil spring 32. To be more specific, the dimension of the damper assembly 40 in a direction perpendicular to the center line of the coil spring 32 is less than the internal diameter of the coil spring 32. The damper assembly 40 is substantially columnar as a whole. The diameter of the damper assembly 40 is less than the internal diameter of the coil spring 32. The damper assembly 40 and the coil spring 32 are located coaxially with each other.

At least part of the damper assembly 40 is located at the radially inner side of the coil spring 32. At least part of the damper assembly 40 overlaps the coil spring 32 when seen in the direction perpendicular to the center line of the coil spring 32, the center line extending in the urging direction of the coil spring 32, i.e., when seen in a direction perpendicular to the upward-downward direction.

The damper assembly 40 includes: a fixed portion fixedly located in the casing 3; and a movable portion that is displaceable together with the push rod 31 relative to the fixed portion. The fixed portion is a cylinder 41, which is substantially cylindrical. The cylinder 41 is removable from the casing 3. The entire cylinder 41 is located in the accommodating chamber 3b. The diameter of the cylinder 41 is less than the internal diameter of the coil spring 32. The lower surface of the cylinder 41 is in contact with the cover 15.

FIG. 2 schematically shows an internal configuration of the cylinder 41 of one of the two damper assemblies 40, specifically, the damper assembly 40 shown on the left side of the drawing. The movable portion of the damper assembly 40 includes a piston 42, a piston rod 43, and a rod head 44. The piston 42, the piston rod 43, and the rod head 44 are integrally displaced relative to the cylinder 41.

The piston 42 is located in the cylinder 41 in such a manner that the piston 42 is movable within the cylinder 41 in the upward-downward direction. The piston rod 43 is connected to the piston 42, and penetrates the upper end portion of the cylinder 41 in the upward-downward direction. The rod head 44, which is substantially cylindrical, is fixed to an end portion of the piston rod 43, the end portion extending out of the cylinder 41. The diameter of the rod head 44 is less than the internal diameter of the coil spring 32. The rod head 44 has such an external dimension that the rod head 44 can be passed into the guide hole 3a. The diameter of the rod head 44 is less than the diameter of the guide hole 3a.

The upper end portion of the rod head 44 is in contact with the lower end portion of the push rod 31. Specifically, the lower end portion of the push rod 31 has a substantially bottomed tubular shape that is open downward, and includes: a circular bottom wall 31a; and a cylindrical peripheral wall 31b located on the peripheral edge of the bottom wall 31a. The rod head 44 is positioned radially inward of the peripheral wall 31b. The internal diameter of the peripheral wall 31b and the diameter of the rod head 44 are substantially the same. The upper surface of the rod head 44 is in contact with the bottom wall 31a. The lower end portion of the peripheral wall 31b is in contact with the annular spring receiver 33.

In the present embodiment, the cylinder 41 is filled with oil, and the interior of the cylinder 41 is segmented into an upper first chamber 41a and a lower second chamber 41b by the piston 42. The damper assembly 40 includes passages through which the oil is movable between the first chamber 41a and the lower second chamber 41b.

Specifically, the piston 42 includes a first passage 46a and a second passage 46b, through which the first chamber 41a and the second chamber 41b communicate with each other. A first valve 47a is located on the first passage 46a. The first valve 47a allows a fluid flow from the first chamber 41a to the second chamber 41b through the first passage 46a, and prevents a fluid flow from the second chamber 41b to the first chamber 41a through the first passage 46a. A second valve 47b is located on the second passage 46b. The second valve 47b allows a fluid flow from the second chamber 41b to the first chamber 41a through the second passage 46b, and prevents a fluid flow from the first chamber 41a to the second chamber 41b through the second passage 46b. For example, each of the first valve 47a and the second valve 47b is a disc-shaped shim located radially outward of the piston rod 43.

In the present embodiment, the damper assembly 40 is configured to generate resistance force only when the movable portion is pushed downward. That is, the first passage 46a, the second passage 46b, the first valve 47a, and the second valve 47b are configured such that a fluid flow from the second chamber 41b to the first chamber 41a receives more resistance than a fluid flow from the first chamber 41a to the second chamber 41b does. For example, the cross-sectional area of the second passage 46b is less than the cross-sectional area of the first passage 46a.

The damper assembly 40 includes a damper spring 45. The damper spring 45 is located between the cylinder 41 and the rod head 44 in the upward-downward direction, and urges the push rod 31 upward. In a case where the cam 4 swings from the neutral position and thereby the pusher 22 is displaced upward, the damper spring 45 maintains a state where the pusher 22 of the cam 4 and the upper end portion of the push rod 31 are in contact with each other.

To be more specific, as shown on the right side of FIG. 3, in a case where the cam 4 swings from the neutral position and thereby the pusher 22 is displaced upward, the damper spring 45 pushes the push rod 31 upward to be spaced apart from the spring receiver 33, which is in contact with the upper surface of the accommodating chamber 3b. Since the state where the pusher 22 of the cam 4 and the upper end portion of the push rod 31 are in contact with each other is maintained in this way, resistance force can be applied to the motion of the cam 4 when the cam 4 moves from the fully operated position to the neutral position. This makes it possible to avoid so-called overshoot, in which the cam 4 moves beyond the neutral position when returning to the neutral position.

The annular spring receiver 34 functions as a damper support that is contact with the damper assembly 40 in the direction perpendicular to the center line of the coil spring 32 and that supports the damper assembly 40 in the direction perpendicular to the center line of the coil spring 32. That is, the spring receiver 34 restricts the movement of the damper assembly 40 in the accommodating chamber 3b in the direction perpendicular to the center line of the coil spring 32. Specifically, the spring receiver 34 includes: a disc-shaped bottom wall 34a, which is in contact with the lower end portion of the coil spring 32; a cylindrical outer peripheral wall 34b, which rises upward from the outer peripheral edge of the bottom wall 34a; and a cylindrical inner peripheral wall 34c, which rises upward from the inner peripheral edge of the bottom wall 34a.

The diameter of the outer peripheral surface of the outer peripheral wall 34b, the outer peripheral surface facing radially outward, is roughly the same as the diameter of the accommodating chamber 3b. Therefore, as a result of the spring receiver 34 being located in the accommodating chamber 3b, the movement of the spring receiver 34 relative to the accommodating chamber 3b in the direction perpendicular to the center line of the coil spring 32 is restricted. Further, the diameter of the inner peripheral surface of the inner peripheral wall 34c, the inner peripheral surface facing radially inward, is roughly the same as the diameter of the outer peripheral surface of the damper assembly 40, to be more specific, roughly the same as the diameter of the outer peripheral surface of the lower end portion of the cylinder 41. Therefore, as a result of the damper assembly 40 being located radially inward of the spring receiver 34, the movement of the damper assembly 40 relative to the spring receiver 34 in the direction perpendicular to the center line of the coil spring 32 is restricted.

### (Grease Cups)

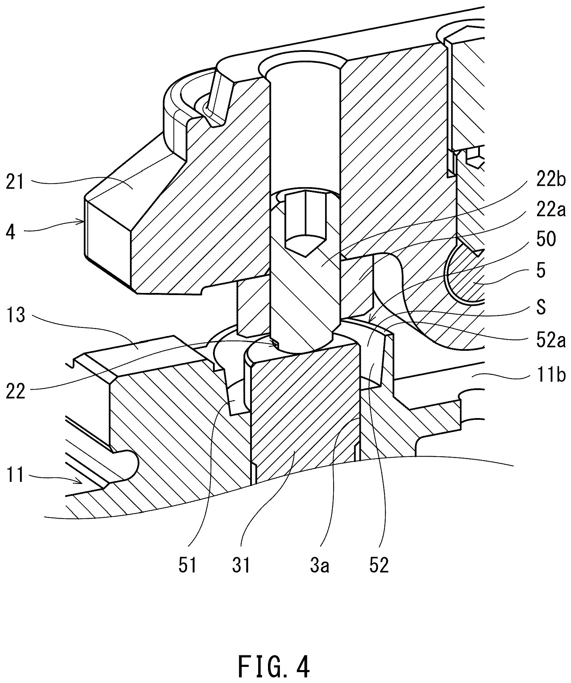

FIG. 4 is a partially enlarged perspective view showing, in an enlarged manner, a contact portion where the cam 4 and the push rod 31 are in contact with each other and the vicinity thereof. The electrical operating device 1 includes grease cups 50. Above each of the guide holes 3a, a corresponding one of the grease cups 50 forms, together with the upper end portion of the push rod 31, a storage space S to store grease therein. The grease cups 50 are integrally molded with the base 11. To be more specific, in the present embodiment, the grease cups 50 are part of the casing 3, and the grease cups 50, the base 11, the pair of cam supports 12, the stoppers 13, and the spring cases 14 are integrally molded together.

Each grease cup 50 includes: an annular bottom wall 51; and a cylindrical peripheral wall 52, which rises upward from the outer peripheral edge of the bottom wall 51. Below the cam 4, the bottom wall 51 faces upward, and faces the cam 4 in the upward-downward direction. The inner peripheral edge of the bottom wall 51 is connected to the upper end of the guide hole 3a, and the guide hole 3a extends downward from the inner peripheral edge of the bottom wall 51. The inner peripheral edge of the bottom wall 51 defines the boundary between the cylindrical surface of the guide hole 3a and the bottom wall 51.

A contact portion where the pusher 22 of the cam 4 and the push rod 31 are in contact with each other is positioned such that the portion is immersed in the grease within the grease cup 50. Specifically, the grease cup 50 is configured such that when the cam 4 is present within at least part of the swing range, the pusher 22 is positioned below the upper end 52a of the peripheral wall 52. In the present embodiment, as shown in FIG. 2, when the cam 4 is in the neutral position, the height of the contact portion where the pusher 22 of the cam 4 and the push rod 31 are in contact with each other coincides with the height of the upper end 52a of the peripheral wall 52 of the grease cup 50. Accordingly, when the cam 4 swings from the neutral position, one of the two pushers 22 is displaced downward relative to the upper end 52a of the peripheral wall 52 of the grease cup 50.

In the present embodiment, in a state where the stopper 13 is in contact with the cam 4, the height of the upper end of the push rod 31 is substantially the same as the height of the bottom wall 51. That is, when the cam 4 is in the neutral position, the storage space S is an annular space since the upper end portion of the push rod 31 protrudes upward from the guide hole 3a, whereas when the upper end of the push rod 31 moves downward relative to the upper end 52a of the peripheral wall 52, at least part of the storage space S becomes a columnar space.

When the cam 4 is in the neutral position, the height of the contact portion where the pusher 22 of the cam 4 and the push rod 31 are in contact with each other does not necessarily coincide with the height of the upper end 52a of the peripheral wall 52 of the grease cup 50. For example, when the cam 4 is in the neutral position, the height of the contact portion where the pusher 22 of the cam 4 and the push rod 31 are in contact with each other may be either lower than or higher than the height of the upper end 52a of the peripheral wall 52 of the grease cup 50. The arrangement of the cam 4 may be such that when the swing angle of the cam 4 from the neutral position is maximized, i.e., when the cam 4 is in contact with the stopper 13, the pusher 22 is positioned below the upper end 52a of the peripheral wall 52. In a state where the stopper 13 is in contact with the cam 4, the height of the upper end of the push rod 31 may be lower than the height of the bottom wall 51, or may be higher than the height of the bottom wall 51.

The base 11 includes a recessed portion 11b, which is positioned between the two grease cups 50 in the front-back direction and which is recessed downward. Accordingly, a portion of the upper surface of the base 11, the portion overlapping the cam shaft 5 when seen in a top view, is recessed downward compared to the upper ends 52a of the respective peripheral walls 52. In the present embodiment, the central portion of the cam 4 is accommodated in a space surrounded by the recessed portion 11b. As a non-limiting example, the lower end of the cam 4 when it is in the neutral position is positioned below the upper ends 52a of the respective peripheral walls 52.

### (Functional Advantages)

As described above, the present embodiment includes the grease cups 50. Each grease cup 50 forms, together with the upper end portion of the corresponding push rod 31, the storage space S to store grease therein. This makes it possible to retain the grease around the upper end portion of the push rod 31. Further, since each grease cup 50 is integrally molded with the base 11, the number of components necessary for retaining the grease can be reduced.

In the present embodiment, the grease cup 50 is configured such that when the cam 4 is present within at least part of the swing range, the pusher 22 is positioned below the upper end 52a of the peripheral wall 52. Therefore, not only wear of a sliding portion where the upper end portion of the push rod 31 and the base 11 slide against each other, but also wear of a sliding portion where the upper end portion of the push rod 31 and the pusher 22 of the cam 4 slide against each other can be suppressed by the grease stored in the grease cup 50.

Further, according to the present embodiment, the position of the cam shaft 5 can be set as low as possible while preventing interference between a portion of the cam 4 near the cam shaft 5 and the base 11. Accordingly, the height of the contact portion where the upper end portion of the push rod 31 and the pusher 22 of the cam 4 are in contact with each other and the height of the rotational center of the cam 4 can be made closer to each other, which makes it possible to readily realize a configuration in which wear of the contact portion is reduced.

### <Other Embodiments>

Although the embodiment has been described above, modifications, deletions, and additions can be made to the above-described configurations without departing from the scope of the present disclosure.

For example, in the above-described embodiment, an example has been given, in which the electrical operating device is used as a travel pedal device of a construction machine. Alternatively, the electrical operating device may be made applicable to a pedal that is not a travel pedal. The electrical operating device may be an electrical lever device that is hand-operated by the operator. In this case, instead of or in addition to the pedal, a lever may be mounted to the cam.

The electrical operating device is suitably applicable to a hydraulic circuit intended for driving a construction machine, such as a hydraulic excavator, a hydraulic crane, or a wheel loader. However, the electrical operating device is applicable not only to construction machines, but also to other vehicles and machines.

In the above-described embodiment, the electrical operating device includes the left operating equipment and the right operating equipment. Alternatively, the electrical operating device may include either one of the left operating equipment or the right operating equipment.

In the above-described embodiment, the electrical operating device has a structure that is substantially symmetrical with respect to a plane perpendicular to the front-back direction, the plane passing through the cam shaft. Alternatively, the electrical operating device may have a structure that is asymmetrical with respect to the plane perpendicular to the front-back direction, the plane passing through the cam shaft. For example, in the above-described embodiment, the electrical operating device includes the pair of push rods 31, the pair of coil springs 32, and the pair of damper assemblies 40. Alternatively, the electrical operating device may be configured such that the push rod, the coil spring, and the damper assembly are located at either one of the front side or the back side with respect to the cam shaft. In this case, the electrical operating device is configured such that the cam that swings integrally with the operating tool is operated from the non-operation position only in a direction against the urging force of the coil spring.

The position of the potentiometer 6, which detects the swing angle of the cam 4, is changeable as necessary. The electrical operating device may be configured in any way, so long as the electrical operating device outputs an electrical signal corresponding to an operation performed with the operating tool. The electrical operating device may include, instead of the potentiometer, a different type of electronic equipment that detects any one of the following: whether or not the cam has swung; a swing direction of the cam; and a swing angle of the cam. For example, the electrical operating device may include, instead of or in addition to the potentiometer, a switch that detects a swing of the cam from the non-operation position.

The structure and configuration of the damper assembly described in the above embodiment are merely one example. The damper assembly need not be substantially columnar as a whole. The diameter of the damper assembly may be greater than or equal to the internal diameter of the coil spring. It is not essential that at least part of the damper assembly overlap the coil spring when seen in the direction perpendicular to the center line of the coil spring. The damper assembly and the coil spring may be separately located in respective accommodating chambers that are compartmented from each other in the upward-downward direction. The fluid in the cylinder need not be oil, but may be, for example, gas.

It has been described that the damper assembly is configured to generate resistance force only when the movable portion is pushed downward. Alternatively, the damper assembly may be configured to generate the resistance force not only when the movable portion is pushed downward, but also when the movable portion is pushed upward. Further, for example, the passages through which the oil is movable between the first chamber and the second chamber may be included not in the piston, but in the cylinder.

Instead of accommodating the damper assemblies in the casing, the casing may include damper chambers that serve the same role as the cylinders that are removable from the casing. In this case, each damper chamber may be filled with oil, and may be segmented into the upper first chamber 41a and the lower second chamber 41b by the piston 42.

The configuration of the casing is not limited to the one described in the above embodiment. For example, the base need not include the bolt holes. In the casing 3 in the above-described embodiment, the base 11, the pair of cam supports 12, the stoppers 13, the spring cases 14, and the grease cups 50 are integrally molded together. However, the casing is not limited to this configuration. Among the base, the pair of cam supports, the stoppers, the spring cases, and the grease cups, at least one of these elements may be separate from the other elements. For example, the pair of cam supports and/or the stoppers may be separate from the base. As another example, the base and the spring cases may be separate from each other. The cover may be integrally molded with, for example, the spring cases.

In the above-described embodiment, the portion of the upper surface of the base 11, the portion overlapping the cam shaft 5 when seen in a top view, is recessed downward compared to the upper ends 52a of the respective peripheral walls 52. However, the shape of the base is not limited to this.

The shape of each grease cup is not limited to the one described above in the embodiment. The shape of the grease cup is not particularly limited, as long as the grease cup has a recessed shape when seen in a side view so that the grease can be stored in the grease cup. For example, the outer peripheral edge of the bottom wall of the grease cup need not be a circular shape, but may be, for example, a square shape. The peripheral wall of the grease cup need not have a cylindrical shape, but may have an inverted frustum shape such that the cross section of the peripheral wall perpendicular to the upward-downward direction becomes smaller toward the lower side. The grease cup need not have a bottom wall perpendicular to the upward-downward direction. Instead, the entire grease cup may have an inverted frustum shape such that its cross section perpendicular to the upward-downward direction becomes smaller toward the lower side.

Further, in the above-described embodiment, the contact portion where the pusher 22 of the cam 4 and the push rod 31 are in contact with each other is located such that the contact portion is immersed in the grease within the grease cup 50. However, the contact portion where the pusher of the cam 4 and the push rod are in contact with each other need not be located such that the contact portion is immersed in the grease within the grease cup. Even in such a case, wear of the sliding portion where the upper end portion of the push rod and the base slide against each other can be suppressed.

### [Aspects of Disclosure]

Each of the following aspects discloses a preferred embodiment.

### [Aspect 1]

An electrical operating device for outputting an electrical signal corresponding to an operation performed with an operating tool, the electrical operating device including: a cam shaft extending in a horizontal direction; a cam that includes a pusher and to which the operating tool is mounted, the cam being swingable about the cam shaft; a push rod that is positioned below the pusher and that is displaced downward as a result of an upper end portion of the push rod being pushed downward by the pusher; a base including a guide hole that extends in an upward-downward direction below the pusher and that guides the push rod in the upward-downward direction; and a grease cup that forms, above the guide hole and together with the upper end portion of the push rod, a storage space to store grease therein, wherein the grease cup is integrally molded with the base.

The above configuration includes the grease cup that forms, together with the upper end portion of the push rod, the storage space to store the grease therein. This makes it possible to retain the grease around the upper end portion of the push rod. Further, since the grease cup is integrally molded with the base, the number of components necessary for retaining the grease can be reduced.

### [Aspect 2]

The electrical operating device according to aspect 1, wherein the grease cup includes: an annular bottom wall that faces the cam in the upward-downward direction below the cam and that includes an inner peripheral edge connected to an upper end of the guide hole; and a peripheral wall that rises upward from an outer peripheral edge of the bottom wall.

### [Aspect 3]

The electrical operating device according to aspect 2, wherein the cam is swingable within a predetermined swing range, and the grease cup is configured such that when the cam is present within at least part of the swing range, the pusher is positioned below an upper end of the peripheral wall.

According to the above configuration, not only wear of a sliding portion where the upper end portion of the push rod and the base slide against each other, but also wear of a sliding portion where the upper end portion of the push rod and the pusher of the cam slide against each other can be suppressed by the grease stored in the grease cup.

### [Aspect 4]

The electrical operating device according to any one of aspects 1 to 3, wherein a portion of an upper surface of the base, the portion overlapping the cam shaft when seen in a top view, is recessed downward compared to an upper end of the peripheral wall.

According to the above configuration, the position of the cam shaft can be set as low as possible while preventing interference between a portion of the cam near the cam shaft and the base. Accordingly, the height of the contact portion where the upper end portion of the push rod and the pusher of the cam are in contact with each other and the height of the rotational center of the cam can be made closer to each other, which makes it possible to readily realize a configuration in which wear of the contact portion is reduced.

### [Aspect 5]

The electrical operating device according to any one of aspects 1 to 4, wherein the push rod is a first push rod, the electrical operating device including a second push rod that is, in a horizontal direction perpendicular to the cam shaft, located at an opposite side to the first push rod across the cam shaft.

### Reference Signs List

1: electrical operating device
3: casing
3a: guide hole
3b: accommodating chamber
4: cam
5: cam shaft
6: potentiometer
11: base
15: cover
22: pusher
31: push rod
32: coil spring
33: spring receiver
34: spring receiver
40: damper assembly
41: cylinder
42: piston
43: piston rod
44: rod head
45: damper spring
50: grease cup
51: bottom wall
52: peripheral wall

## Claims

1. An electrical operating device for outputting an electrical signal corresponding to an operation performed with an operating tool, the electrical operating device comprising:
a cam shaft extending in a horizontal direction;
a cam that includes a pusher and to which the operating tool is mounted, the cam being swingable about the cam shaft;
a push rod that is positioned below the pusher and that is displaced downward as a result of an upper end portion of the push rod being pushed downward by the pusher;
a base including a guide hole that extends in an upward-downward direction below the pusher and that guides the push rod in the upward-downward direction; and
a grease cup that forms, above the guide hole and together with the upper end portion of the push rod, a storage space to store grease therein, wherein
the grease cup is integrally molded with the base.

2. The electrical operating device according to claim 1, wherein
the grease cup includes:
an annular bottom wall that faces the cam in the upward-downward direction below the cam and that includes an inner peripheral edge connected to an upper end of the guide hole; and
a peripheral wall that rises upward from an outer peripheral edge of the bottom wall.

3. The electrical operating device according to claim 2, wherein
the cam is swingable within a predetermined swing range, and
the grease cup is configured such that when the cam is present within at least part of the swing range, the pusher is positioned below an upper end of the peripheral wall.

4. The electrical operating device according to claim 1 or 2, wherein
a portion of an upper surface of the base, the portion overlapping the cam shaft when seen in a top view, is recessed downward compared to an upper end of the peripheral wall.

5. The electrical operating device according to claim 1 or 2, wherein the push rod is a first push rod,
the electrical operating device comprising a second push rod that is, in a horizontal direction perpendicular to the cam shaft, located at an opposite side to the first push rod across the cam shaft.
